# EUROPEAN PATENT SPECIFICATION

(11) **EP 3 290 340 B1**
(45) Date of publication and mention of the grant of the patent: **15.04.2020**
(21) Application number: 16186258.6
(22) Date of filing: 30.08.2016
(51) Int. Cl.: B64D 11/00, A47H 1/124

(54) **LATERAL LINEAR MOVING CURTAIN RAIL**
SEITLICHE, LINEAR BEWEGBARE VORHANGSCHIENE
RAIL DE RIDEAU LATÉRAL À DÉPLACEMENT LINÉAIRE

(43) Date of publication of application: 07.03.2018
(73) Proprietor: Airbus Operations GmbH, 21129 Hamburg (DE)
(72) Inventor: Holtorf, Boris, 21129 Hamburg (DE); Kyas, Gunter, 21129 Hamburg (DE)
(74) Representative: Schicker, Silvia

(56) References cited:
- CN-A- 102 774 500
- CN-U- 205 273 878
- US-A- 4 120 474
- US-A1- 2012 234 976
- US-A1- 2012 273 613

## Description

The present invention relates to a vehicle cabin curtain rail attachment, which is suitable for use in an aircraft.

In a vehicle, in particular an aircraft, various equipment has to be installed within an interior space of the vehicle. For instance, electrical equipment, control components, oxygen supply for aircraft passengers and similar devices are installed behind linings or ceiling elements of the vehicle. These devices may be mounted to a structural component or an installation rail, using bolts, nuts, screws and/or similar fasteners. From time to time, maintenance work has to be done on these devices.

Whenever a customer airline decides to use a curtain rail for having the option to separate for example a galley area from a passenger area during catering, there are usually several options where to mount the curtain rail.

For example, according to a first option the curtain rail is routed outboard of the aircraft related circuit breaker panel, the so called 2001VU. Then the curtain will be ending on the galley front or on the standard units and trolleys. This leads to the problem that the curtain would have to be opened, whenever the standard units or trolleys are being used.

For example, according to a second option the curtain rail is routed to the inboard wall next to the aircraft related circuit breaker panel, to the 2001VU, which is usually covered by a plexiglass cover. However, in case of failure, maintenance or for another reason an electronic device behind the plexiglass cover has to be dismounted or exchanged, the plexiglass cover is usually not fully openable for access to the circuit breakers any more as the curtain rail is located just below the plexiglass cover. In this situation, the plexiglass cover will only open as far as until the plexiglass cover rests on the curtain rail. This in turn makes maintenance work complicated and time consuming. However, between two flights of an aircraft, the time for maintenance work is short.

US 8, 684, 308 (B2) or EP 2 26 8 54 2 (B1) describes an arrangement for receiving a curtain rail for a curtain for partitioning at least two regions in a cabin of a vehicle, with a bottom facing the floor of the cabin, and a top facing the ceiling of the cabin, wherein the bottom is essentially planar and is designed to receive the curtain rail.

However, in case of maintenance, there is still the problem that the plexiglass cover cannot be opened such that enough space is available that the maintenance can be performed as short and as comfortable as possible.

Furthermore, US 2012/234976 A1 refers to a ceiling panel for attaching a curtain in a cabin of a transportation device with two attachment units, which are designed as rails. A curtain attachment unit is movable along the rail in a longitudinal direction of the ceiling panel. The curtain attachment unit is movable in a transverse direction relative to the longitudinal direction of the ceiling panel.

CN 102 774 500 A refers to a curtain rail section being arranged at guiding rails, along which the curtain rail section is movable.

CN 2005 273 878 U refers to a curtain rail section being arranged between two guiding rails and being movable along these. The curtain rail section is made of a single piece and comprises a curvature before which a stopping element is provided.

US 2012/273613 A1 refers a to mounting module being arranged in a cabin of an aircraft, wherein the mounting module can be folded into a center hatrack.

US 4 120 474 A refers to a drapery support assembly designed for a fixed mounting in a room of a building and for a curtain rod being provided with a bracket. The bracket is movable along a rail.

It is an object of the present invention to provide a curtain rail attachment that is easily and quickly taken outside a space needed for maintenance work and also moved back quickly after the maintenance work is finished.

This object is solved by vehicle curtain rail attachment according to independent claim 1. Preferred embodiments are defined by the dependent claims.

According to an aspect to better understand the present disclosure, a vehicle cabin curtain rail attachment is provided which comprises a guiding rail adapted to be mounted fixedly within a cabin of the vehicle and a movable curtain rail section for receiving and/or guiding a curtain, wherein the movable curtain rail section is adapted to slide along the guiding rail to a desired position. The desired position is defined as a position on the guiding rail at which the movable curtain rail section shall be detachably fixed to the guiding rail. The guiding rail is mounted fixedly to a monument of the vehicle or to another space within the cabin by using screws or the like. The movable curtain rail section is attached to the guiding rail in a manner that it can slide along the guiding rail. Advantageously, the curtain rail section can be moved out of the way when necessary, i.e. in situations where maintenance work has to be performed, and back, i.e. after the maintenance work is finished.

The movable curtain rail section is retained in the desired position along the guiding rail by at least one movable end stop button being adapted to slide along the guiding rail and being adapted to engage with the guiding rail in order to fix the movable end stop button to the guiding rail in a locking position. The desired locking position of the movable end stop button is located adjacent to the desired position of the movable curtain rail section. In the locking position the movable end stop engages with the movable curtain rail section and the guiding rail. The movable end stop button is movable along the guiding rail together with the movable curtain rails section. When the desired position of the movable curtain rail section is reached at a position somewhere along the guiding rail, the at least one movable end stop button is positioned in its fixed state, i.e. the desired locking state, in which the at least one movable end stop button engages with the guiding rail and with the movable curtain rail section. The at least one end stop button is detachable from the fixed state. The locking and the unlocking of the end stop button can be performed without tooling. It is an advantage that even the crew can get access to the circuit breaker for example during a flight, if necessary.

The movable curtain rail section is movable along the at least one guiding rail between two fixed end stop buttons being mounted at the end pieces of the guiding rail and being adapted to prevent the movable curtain rail section from being detached from the guiding rail. The two fixed end stop buttons prevent the movable curtain rail section from getting loose from the guiding rail. The fixed end stop buttons at the end pieces of the guiding rails provide safety in situations where the movable curtain rail section is sliding along the guiding rail and in case of a failure of the movable end stop buttons. It would also be possible to use screws for the fixed end stop buttons.

The movable end stop buttons are adapted to be in an unlocked state in which they are movable along the guiding section to the desired position and to be in a locked state in which they a detachably fixed in the desired position for retaining the movable curtain rail section in the desired position. In this way, the curtain can be arranged so that is gives as much comfort as possible to the crew and to the passengers of the vehicle, in particular of the aircraft.

The movable and, advantageously also the fixed, end stop button comprises a pin, in particular an index pin, configured for achieving a locked state and an unlocked state. The pin comprises a knob for achieving the unlocked state by using, preferably pushing or pulling, the knob and a spring for achieving automatically the locked state by spring load. Thus, the index pin comprises a knob the use thereof results in the achievement of the unlocked state. In the unlocked state the pin, particularly the index pin, together with the curtain section are slidable along the guiding rail, in particular between the two fixed end stop buttons. Furthermore, the index pin comprises at least on spring, which provides a spring loading. The at least one spring is located within a hollow pin body, preferably a hollow cylindrical section of the pin body. The locked state is achieved automatically by spring loading. For achieving the locked state automatically it is for example sufficient to release the knob of the pin, which then will be spring loaded. In the locked state of the pin the pin, and particularly the curtain rail section positioned between two locked pins, are not movable along the guiding rail. At most the movable curtain rail section is only movable between the two locked movable pins, provided that the two locked movable pins are located a space apart from each other. The movable curtain rail section might then be only slidable along said space. Such a situation can be evoked, if it is needed that the movable curtain rail section remains movable along a defined section of the guiding rail.This section of the guiding rail is defined as "space" above. It is possible that the fixed end stop buttons are provided with screws, since the fixed end stop buttons need not to be operated. It is also possible that the fixed end stop buttons are provided as detachably fixable pins. The advantage of using a pin, in particular an index pin, for at least the movable end stop buttons is the usage thereof without extra tooling.

Advantageously, the vehicle cabin curtain rail attachment comprises a plurality of guiding rails that are mounted fixedly within the cabin, wherein the movable curtain rail section is attached between a pair of guiding rails. The pair of guiding rails are spaced apart from each other that the movable curtain rail section can be attached to the guiding rails easily. Thus, the spacing apart of the pair guiding rails corresponds essentially to the length of the movable curtain rail section. The pair of guiding rails are mounted within the cabin, essentially, parallel to each other. Providing the vehicle cabin curtain rail attachment with a pair of guiding rails improves the safety of the attachment as such.

Each guiding rail is provided with two fixed end stop buttons for preventing the movable curtain rail section from being detached from the guiding rail, wherein one of the fixed end stop buttons is positioned fixedly at each end piece of the guiding rail, and wherein at least one of the guiding rails comprises two movable end stop buttons adapted to retain the movable curtain rail section at the desired position along the guiding rail. While two fixed end stop buttons are provided at the end pieces of a guiding rail, at least two movable end stop buttons are additionally provided which are slideable along the guiding rail together with the movable curtain rail section. The movable end stop buttons can preferably be operated without tooling and are provided at a position somewhere between the two fixed end-stop buttons. It is an advantage that even the crew can lock and unlock the movable end stop buttons during a flight, if necessary.

Preferably, each end piece of the movable curtain rail section is attached to one guiding rail by a guiding-rail-coupling means configured for guiding the movable curtain rail section along the guiding rail. By coupling the movable curtain rail section via guiding-rail-coupling means to the guiding rail, a secure guiding of the curtain rail section along or in the guiding rail(s) is available. The guiding-rail-coupling means can be mounted fixedly to the movable curtain rail section, while the mounting to the guiding rail is performed such that a slidable guidance along the guiding rail is achieved. Preferably, each of the guiding rails is provided with two tracks, between which the guiding-rail-coupling means is or are provided in a movable or slidable manner. It is also possible that each of the guiding rails is provided with a slotted grove in which the guiding-rail-coupling means can slidably engage.

Furthermore, the vehicle cabin curtain rail attachment is provided with means of length compensation on at least one end region of one guiding rail in order to compensate in-motion deformations of the vehicle, preferably in-flight deformations of the aircraft fuselage structure, wherein the means of length compensation comprises a slotted hole. Especially in aircrafts, during a flight the fuselage structure may deform due to changes in the external pressure and due to flight loads. Advantageously, the means of length compensation allows for compensating length deformations. The length compensation available corresponds to the length of the slotted hole. Such length compensation means can be provided at one end piece or at both end pieces of the movable curtain rail section.

Further advantageously, the vehicle cabin curtain rail attachment is provided with means of angle compensation on at least one end region of one guiding rail section in order to compensate in-motion deformations of the vehicle, preferably in-flight deformations of the aircraft fuselage structure, wherein the means of angle compensation comprises preferably a pin attachment configured to adjust an angle between the guiding rail and the movable curtain rail section. Preferably to adjust an angle deviating from a 90° degree angle between an axis of the guiding rail and an axis of the movable curtain rail section being essentially perpendicular to each other when not deformed. Further preferably, the means of angle compensation comprises an axis of rotation via which the angle compensation is transmitted between the movable curtain rail section and the guiding rail(s). The axis of rotation is provided perpendicularly to the axis along which the angle compensation is to be performed. With the angle compensation means any angle between 0 and 180° degrees, preferably ±90 ° degrees, can be compensated. Such angle compensation means can be provided at one end piece or at both end pieces of the movable curtain rail section. Preferably one angle compensation means is provided at one end piece while at the other end piece a length compensation means is provided. It is also possible that at the same end piece a length compensation means and an angle compensation means is provided.

Preferably a vehicle cabin curtain rail attachment is provided, wherein a L- shaped or an U-shaped curtain rail section is provided for connecting to at least one guiding rail, preferably for connecting to a pair of guiding rails. The L-shaped or U-shaped movable curtain rail section comprises at least two or three, preferably linear, movable curtain rail portions, that are coupled by curtain-rail-section-coupling means configured for shifting a curtain from one, preferably linear, curtain rail section to the adjacent curtain rail section. The curtain-rail-section-coupling means allows the transition of a curtain from one curtain rail section to the other. The curtain-rail-section-coupling means are mounted between at least two movable curtain rail sections detachably.

Of course, the curtain-rail-section-couplings means are adjustable into a locked state in which the curtain rail sections are detachably fixed with respect to each other and into an unlocked state in which the curtain rail sections are freely movable with respect to each other. In this way, the shape of the movable curtain rail section can be modified from being linear to being L-shaped or being U-shaped and back vice versa. In this way the shape of the movable curtain rail section can be varied as much as needed, especially during a flight. This in turn enhances the comfort provided by a curtain provided in a vehicle cabin curtain rail attachment. The curtain-rail-section-couplings means comprises a knob for achieving the unlocked state and a spring for achieving the locked position automatically by spring load. In this way the crew can without tooling vary the shape of movable curtain rail section.

Preferred embodiments of the vehicle cabin curtain rail attachment, in particular for an aircraft, are described in greater detail with reference to the attached schematic drawings in the following, wherein
- Fig. 1: shows a top view of the vehicle cabin curtail rail arrangement according to the present invention in the normal position, for example during a flight,
- Fig. 2: shows a top view of the vehicle cabin curtail rail arrangement according to the present invention in the access position, for example during maintenance work,
- Fig. 3: shows a side view of the vehicle cabin curtail rail arrangement according to the present invention,
- Figs. 4a, b: show two possible positions of the movable curtain rail section,
- Figs. 5a, b: show two possible further positions of the movable curtain rail section,
- Fig. 6: shows an index pin in perspective side views,
- Figs. 7a, b: show a side view of the index pin mounted in the vehicle cabin curtail rail arrangement in the locked state (Fig. 7a) and the unlocked state (Fig. 7b), and
- Figs. 8a, b: show means of length compensation (Fig. 8a) and means of angle compensation (Fig. 8b).

The following detailed description of the schematic drawings focuses on the illustrated implementation variants of a vehicle cabin curtain rail attachment in particular for an aircraft.

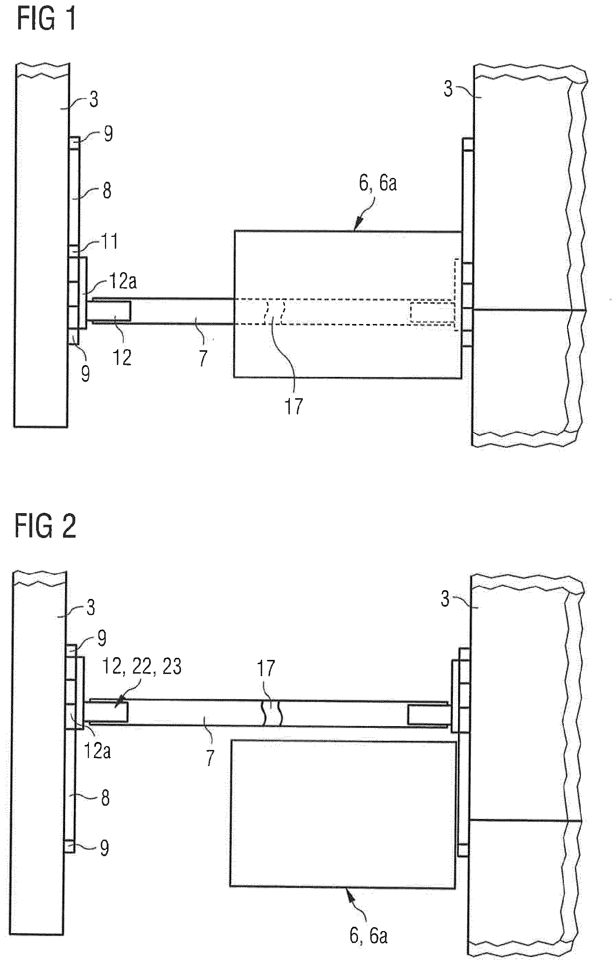

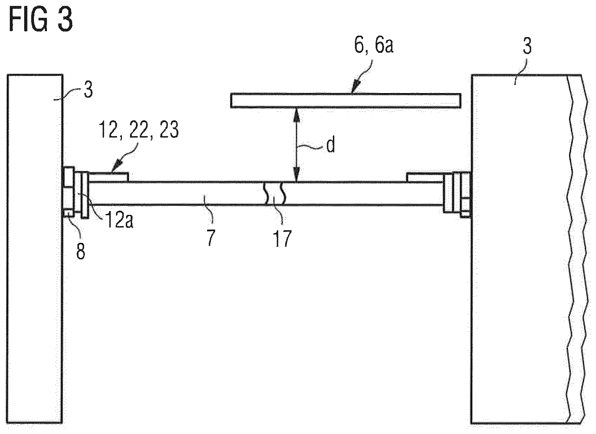

Fig. 1 shows a top view of the cabin curtain rail attachment 1 according to the present invention. A movable curtain rail section 7 is mounted between two guiding rails 8. Each guiding rail 8 is provided with a fixed end stop button 9 at the end pieces 10 of the guiding rails 8 preventing the movable curtain rail section from being detached. The movable curtain rail section 7 is in its normal position as shown in Fig. 3 just located below the circuit breaker panel 6 and/or the plexiglass cover 5 respectively. A movable end stop button 11 is used to position the movable curtain rail section in a desired position. The movable end stop button 11 can be brought into a locked and an unlocked state. In the locked state the movable end stop button 11 prevents the movable curtain rail section 7 from sliding along the guiding rail 8, while in the unlocked state a sliding of the movable curtain rail section 7 is possible. The guiding rails 8 are mounted on monuments 3 of the aircraft 4. Monuments 3 are for example partitions or the galleys, in which the trolleys are usually stored when the catering work is done. The movable curtain rail section 7 is coupled to the guiding rail 8 by guiding-rail-coupling means 12 that comprises sliding means 12a. The sliding means 12a of the guiding-rail-coupling means 12 are provided with the guiding rail 8 while the rest of the guiding-rail-coupling means 12 are provided with at least on end region of the movable curtain rail section 7. The guiding-rail-coupling means 12, in particular the sliding means 12a, are configured for guiding the movable curtain rail section 7 along the guiding rail 8, i.e. for transmitting the sliding movement of the movable curtain rail section 7 along the guiding rail 8.

Fig. 2 shows in top view the cabin curtain rail attachment 1 of Fig. 1, but in an access position in which maintenance work can be done easily. In the access position shown in Fig. 2 the movable curtain rail section 7 is moved along the guiding rails 8 away from the circuit breaker panel 6 and the plexiglass cover 5. For doing so the movable end stop button(s) 11 is/are released from its locked state and is/are moved in its unlocked state along the guiding rail(s) 8. As a result the plexiglass cover 5 of the circuit breaker panel 6 is openable fully such that maintenance work can be done easily.

Fig. 3 shows a side view of the cabin curtain rail attachment 1 according to the cabin curtain rail attachment 1 shown in Figs. 1 and 2. In the side view of Fig. 3 it becomes clear that in the normal position the plexiglas cover 5 of the circuit board panel 6 is only openable along a distance d, until the plexiglass cover reaches the movable curtain rail section 7. According to the present invention however, the plexiglass cover 5 can be opened completely, since in the access position as shown in Fig. 2 the movable curtain rail section 7 is moved out of the way.

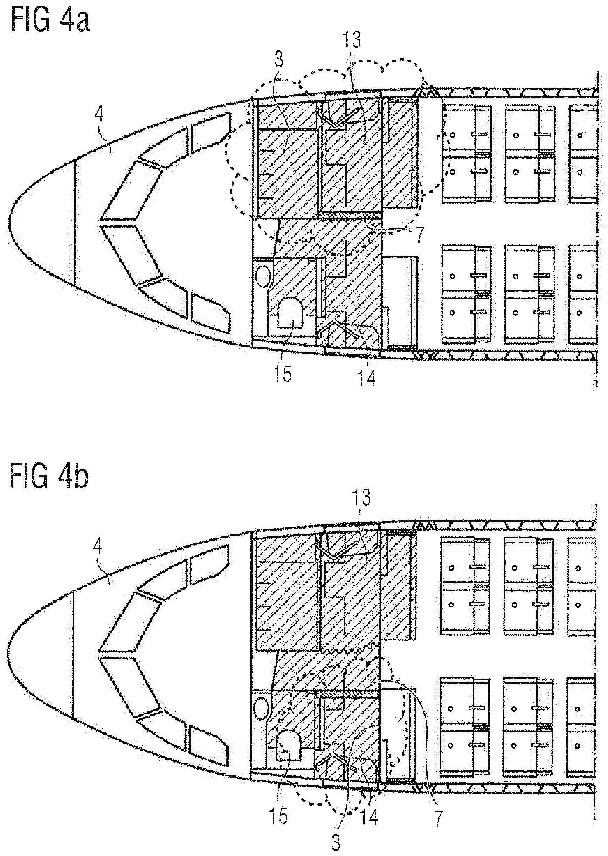

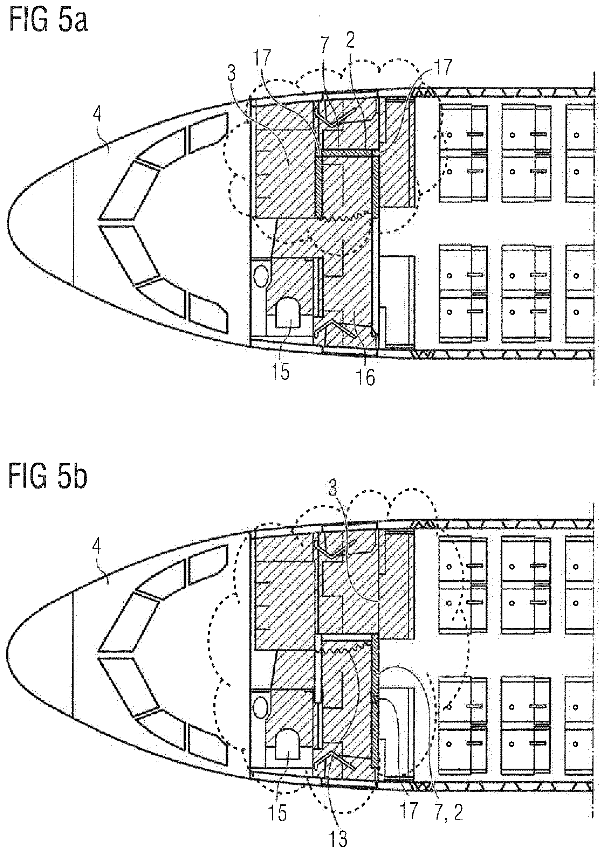

Figs. 4a, b and 5a, b show how the curtain 2 could be provided with the proposed cabin curtain rail attachment 1 within a cabin. By using a lateral linear movable curtain rail section 7 the crew of the aircraft 4 is able to re-dedicate certain areas in the cabin based on the current flight phase. By using the proposed tool-less locking/unlocking principles the variations of providing the curtain 2 within the cabin shown in Figs. 4a, b and 5a, b are possible without support of a maintenance crew.

For example during boarding or during catering activities inside the galley area 13 comprising monuments 3 the curtain 2 provided on the movable curtain rail section 7 will separate the galley 13 from the rest of the cabin (see Fig. 4a). During flight and after catering activities a crew resting area 14 can be separated from the rest of the cabin while the lavatories 15 are still accessible, e.g. on long-haul flights (see Fig. 4b). The cabin curtain rail attachment 1 is for example attached to a or a plurality of monuments 3.

If a U-shaped movable curtain rail section 7 as shown in Fig 5a is used the crew is able to create a larger and more aesthetical reception area 16 during boarding, as the working areas of the galley area 13 would be hidden by the curtain 2 (see Fig. 5a). During catering activities the galley area 13 can be separated from the rest of the cabin. The over length of the curtain can be pulled towards an area where the curtain 2 does not disturb the crew activities (see Fig. 5b). It is possible to provide the movable curtain rail section 7 in L-shape. For providing the transition between a U-shaped (or L-shaped) movable curtail rail section 7 of Fig. 5a to a linear movable curtain rail section 7 of Fig. 5b curtain-rail-coupling means 17 need to be unlocked. The curtain-rail-coupling means 17 can be in a locked state in which they may provide a U-shape or L-shape or a linear shape to the movable curtain rail section 7. When the curtain-rail-coupling means 17 are unlocked the movable curtain rail sections 7 can be brought into position and locked afterwards. For example the curtain-rail-coupling means 17 can comprise tool-less pins with which an unlocking and a locking can be performed easily.

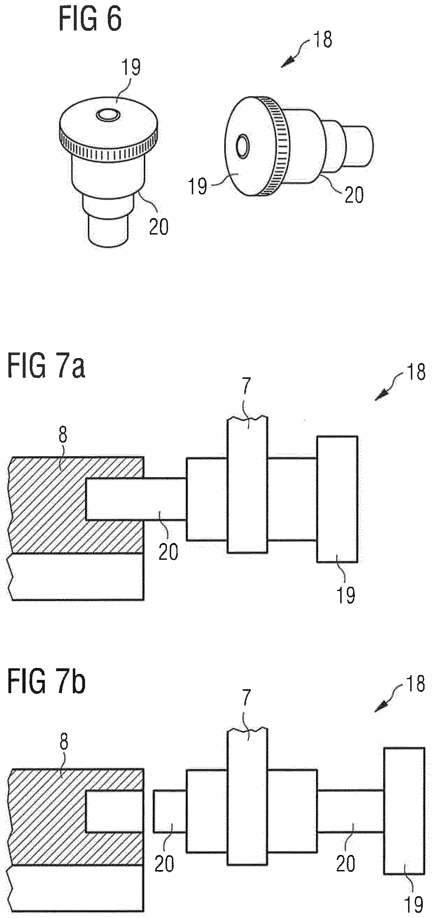

The Fig. 6 shows in a perspective view an index pin 18. The index pin 18 is provided with a knob 19 and a hollow cylindrical body 20 in which a spring (not visible) is housed. The index pin 18 can be operated tool-less. By pushing or pulling the knob 19 the index pin 18 will reach the unlocked state presented in Fig. 7a. Due to the spring the index pin 18 will reach automatically the locked state presented in Fig. 7b due to the spring loading, preferably when the knob is released. Due to the spring loading of the spring that is retained within the hollow cylindrical body 20 the spring is automatically pressed against a surface or a recess provided with a surface with which the cylindrical body 20 that is housing the spring can abut. The abutting of the cylindrical body 20 on a surface generates an abutting force that is acting in a direction opposed to the direction of a spring loading force. The automatically reaching of the locked state is due to the equilibrium of the spring loading force and the abutting force.The Figs. 7a, b show the index pin 18 when it is mounted within the cabin curtain rail attachment 1. Such pins, preferably index pins, can be used for the guiding-rail-coupling means 12 coupling an end region of the movable curtain rail section 7 to the guiding rail 8, as well as for the curtain-rail-coupling means17 interconnecting at least two movable curtain rail sections 7.The shape of the index pin 18 can vary from the index pin shown in Fig. 6.

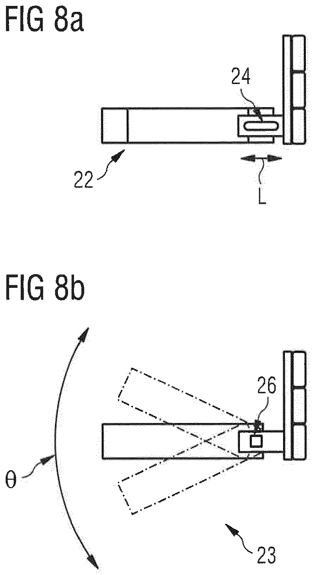

The Figs. 7a, b show the index pin 18 when it is mounted within the cabin curtain rail attachment 1. For example according to Figs. 7a, b the movable curtain rail section 7 is provided with at least on hole through which the cylindrical body 20 of the index pin 18 is inserted. Furthermore, the guiding rail 8 is provided with at least one recess or a hole, in which the cylindrical body 20 of the index pin 18 is engaging in the locked state (Fig. 7a) and from which it is released in the unlocked state. The Figs. 10a, b show means of length compensation 22 (Fig. 8 a) and means of angle compensation 23 (Fig. 8 b). The means of length compensation 22 and/or the means of angle compensation 23 are comprised in the guiding-rail-couplings means 12 (shown in the Figs, 1, 2, and 3). The means of length compensation 22 are provided with a slotted hole 24. The length of the slotted hole 24 provides a compensation length L along a direction that is essentially parallel to the movable curtain rail section 7. The means of angle compensation 23 are provided with a rotating pin axis 26 that allows the rotation of the movable curtain rail section 7 by an angle Θ of 0 and 180 ° degree between the movable curtain rail section 7 and the guiding rail 8. For example, in Fig 8b an angle Θ of approximately 60°, 90° and 120° degrees between the movable curtain rail section 7 and the guiding rail 8 is demonstrated schematically. The means of length compensation 22 are provided on at least one side of the at least one guiding rail 8 in order to compensate in-motion deformations of the vehicle, preferably in-flight deformations of the aircraft fuselage structure. The slotted hole 24 is provided with a length L along which the length compensation can be performed. The means of angle compensation 23 are provided on at least one side of one guiding rail 8 in order to compensate in-motion deformations of the vehicle, preferably in-flight deformations of the aircraft fuselage structure, wherein the means of angle compensation 23 comprises the pin attachment 26 configured to adjust the angle between the guiding rail 8 and the movable curtain rail section 7.

The cabin curtain rail attachment according to the embodiments presented above can be installed on the pelmet or behind the pelmet of a monument 3. The description above is made with respect to an aircraft however this shall not limit the scope of the present invention to aircrafts. Instead, the vehicle cabin curtain rail attachment can be provided to any vehicle, for example such as a train, a bus etc.

### Reference list

- 1: cabin curtain rail attachment
- 2: curtain
- 3: monument
- 4: aircraft
- 5: plexiglass cover
- 6: circuit breaker panel
- 7: movable curtain rail section
- 8: guiding rail
- 9: fixed end stop button
- 10: end piece (of the guiding rail)
- 11: movable end stop button
- 12: guiding-rail-coupling means
- 12a: sliding means
- 13: galley area
- 14: crew area
- 15: lavatory
- 16: aesthetical reception area
- 17: curtain-rail-coupling means
- 18: index pin
- 19: knob
- 20: cylindrical body
- 21: end side (of the movable curtain rail section)
- 22: length compensation means
- 23: angle compensation means
- 24: slotted hole
- 25: length
- 26: pin attachment having a rotation pin axis
- d: distance
- L: compensation length
- Θ: angle

## Claims

1. Vehicle cabin curtain rail attachment (1) comprising:
a guiding rail (8) adapted to be mounted fixedly within a cabin of the vehicle and a movable curtain rail section (7) for receiving and/or guiding a curtain (2),
wherein the movable curtain rail section (7) is adapted to slide along the guiding rail (8) to a desired position,
wherein the movable curtain rail section (7) is configured to be retained in the desired position along the guiding rail (8) by at least one movable end stop button (11) being adapted to slide along the guiding rail (8) and being adapted to engage with the guiding rail (8) in order to fix the at least one movable end stop button (11) to the guiding rail (8) in a locking position, and
wherein the at least one movable end stop button (11) comprises a pin (18) configured for achieving a locked state and an unlocked state.

2. Vehicle cabin curtain rail attachment (1) according to claim 1, wherein the movable curtain rail section (7) is movable along the at least one guiding rail (8) between two fixed end stop buttons (9) being mounted at end pieces (10) of the guiding rail (8) and being adapted to prevent the movable curtain rail section (7) from being detached from the guiding rail (8).

3. Vehicle cabin curtain rail attachment (1) according to claim 1 or 2, wherein the at least one movable end stop button (11) is switchable between an unlocked state in which it is movable along the guiding section (8) to the locking position and a locked state in which it is detachably fixed in the locking position for retaining the movable curtain rail section (7) in the desired position.

4. Vehicle cabin curtain rail attachment (1) according to claim 2, wherein the fixed end stop buttons (9) comprise a pin (18), in particular an index pin (18), configured for achieving a locked state and an unlocked state.

5. Vehicle cabin curtain rail attachment (1) according to claim 4, wherein the pin (18) comprises a knob (19) for achieving the unlocked state by using, preferably pushing or pulling, the knob (19) and a spring for achieving automatically the locked state by spring load.

6. Vehicle cabin curtain rail attachment (1) according to one of claims 1 to 5, wherein a pair of guiding rails (8) is adapted to be mounted fixedly within the cabin, wherein the movable curtain rail section (7) is attached between the two guiding rails (8) of said pair.

7. Vehicle cabin curtain rail attachment (1) according to one of claims 1 to 6, wherein a plurality guiding rails (8) is provided each thereof with two fixed end stop buttons (9) for preventing the movable curtain rail section (7) from being detached from the guiding rail (8), wherein the fixed end stop buttons (9) are positioned fixedly at each end piece (10) of the guiding rail (8), and wherein at least one of the guiding rails (8) comprises two movable end stop buttons (11) adapted to retain the movable curtain rail section (7) at the desired position along the guiding rail (8).

8. Vehicle cabin curtain rail attachment (1) according to one of claims 1 to 7, wherein the movable curtain rail section (7) comprises at least one end piece (21), wherein each end piece (21) of the movable curtain rail section (7) is attached to one guiding rail (8) by a guiding-rail-coupling means (12) configured for guiding the movable curtain rail section (7) along the guiding rail (8).

9. Vehicle cabin curtain rail attachment (1) according to one of claims 1 to 8, wherein means of length compensation (22) are provided on at least one end region of at least one guiding rail (8) in order to compensate in-motion deformations of the vehicle wherein the means of length compensation (22) comprises a slotted hole (24).

10. Vehicle cabin curtain rail attachment (1) according to one of claims 1 to 9, wherein means of angle compensation (23) are provided on at least one side region of the guiding rail (8) in order to compensate in-motion deformations of the vehicle, wherein the means of angle compensation (23) comprise a pin attachment (26) configured to adjust an angle between the guiding rail (8) and the movable curtain rail section (7), preferably to adjust an angle deviating from a 90° degree angle between an axis of the guiding rail (8) and an axis of the movable curtain rail section (7) being essentially perpendicular to each other when not deformed.

11. Vehicle cabin curtain rail attachment (1) according to one of claims 1 to 10, wherein a L-shaped or an U-shaped movable curtain rail section (7) is provided for connecting to at least one guiding rail (8), preferably for connecting to a pair guiding rails (8).

12. Vehicle cabin curtain rail attachment (1) according to claim 11, wherein the L-shaped or U-shaped movable curtain rail section (7) comprises at least two, preferably linear, movable curtain rail portions, that are coupled by curtain-rail-section-coupling means (17) configured for supporting the shifting of the curtain (2) from one, preferably linear, movable curtain rail section (7) to the adjacent movable curtain rail section (7).

13. Vehicle cabin curtain rail attachment (1) according to claim 12, wherein the curtain-rail-section-couplings means are adjustable into a locked state in which the movable curtain rail sections (7) are detachably fixed with respect to each other and into an unlocked state in which the movable curtain rail sections (7) are freely movable with respect to each other.

14. Vehicle cabin curtain rail attachment (1) according to claim 12 or 13, wherein the curtain-rail-section-couplings means comprises a knob (19) for achieving the unlocked state and a spring for achieving the locked position automatically by spring load.

## Patentansprüche

1. Fahrzeugkabinenvorhangschienenanbringung (1), umfassend:
eine Führungsschiene (8), die dazu ausgebildet ist, fest in einer Kabine des Fahrzeugs montiert zu werden, und einen bewegbaren Vorhangschienenabschnitt (7) zum Aufnehmen und/oder Führen eines Vorhangs (2),
wobei der bewegbare Vorhangschienenabschnitt (7) dazu ausgebildet ist, entlang der Führungsschiene (8) in eine gewünschte Position zu gleiten,
wobei der bewegbare Vorhangschienenabschnitt (7) dazu ausgebildet ist, von mindestens einem bewegbaren Endanschlagknopf (11), der dazu ausgebildet ist, entlang der Führungsschiene (8) zu gleiten, und dazu ausgebildet ist, mit der Führungsschiene (8) in Eingriff zu gelangen, um den mindestens einen bewegbaren Endanschlagknopf (11) in einer Verriegelungsposition an der Führungsschiene (8) zu befestigen, in der gewünschten Position gehalten zu werden, und
wobei der mindestens eine bewegbare Endanschlagknopf (11) einen Stift (18) umfasst, der dazu ausgebildet ist, einen verriegelten Status und einen entriegelten Status zu erreichen.

2. Fahrzeugkabinenvorhangschienenanbringung (1) nach Anspruch 1, wobei der bewegbare Vorhangschienenabschnitt (7) entlang der mindestens einen Führungsschiene (8) zwischen zwei befestigten Endanschlagknöpfen (9), die an Endstücken (10) der Führungsschiene (8) befestigt und dazu ausgebildet sind, zu verhindern, dass der bewegbare Vorhangschienenabschnitt (7) von der Führungsschiene (8) abgenommen werden kann, bewegbar ist.

3. Fahrzeugkabinenvorhangschienenanbringung (1) nach Anspruch 1 oder 2, wobei der mindestens eine bewegbare Endanschlagknopf (11) zwischen einem entriegelten Status, in dem er entlang dem Führungsabschnitt (8) in die Verriegelungsposition bewegbar ist, und einem verriegelten Status, in dem er abnehmbar in der Verriegelungsposition befestigt ist, um den bewegbaren Vorhangschienenabschnitt (7) in der gewünschten Position zu halten, umschaltbar ist.

4. Fahrzeugkabinenvorhangschienenanbringung (1) nach Anspruch 2, wobei die befestigten Endanschlagknöpfe (9) einen Stift (18), insbesondere einen Indexstift (18), umfassen, der dazu ausgebildet ist, einen verriegelten Status und einen entriegelten Status zu erreichen.

5. Fahrzeugkabinenvorhangschienenanbringung (1) nach Anspruch 4, wobei der Stift (18) einen Knopf (19) umfasst, um den entriegelten Status durch Verwenden, vorzugsweise Schieben oder Ziehen, des Knopfes (19) und einer Feder zu erreichen, um den verriegelten Status automatisch durch Federlast zu erreichen.

6. Fahrzeugkabinenvorhangschienenanbringung (1) nach einem der Ansprüche 1 bis 5, wobei ein Paar von Führungsschienen (8) dazu ausgebildet ist, fest innerhalb der Kabine montiert zu werden, wobei der bewegbare Vorhangschienenabschnitt (7) zwischen den zwei Führungsschienen (8) des Paares angebracht ist.

7. Fahrzeugkabinenvorhangschienenanbringung (1) nach einem der Ansprüche 1 bis 6, wobei eine Vielzahl von Führungsschienen (8) bereitgestellt ist, von denen jede zwei befestigte Endanschlagknöpfe (9) umfasst, um zu verhindern, dass der bewegbare Vorhangschienenabschnitt (7) von der Führungsschiene (8) abgenommen wird, wobei die befestigten Endanschlagknöpfe (9) fest an jedem Endstück (10) der Führungsschiene (8) positioniert sind, und wobei mindestens eine der Führungsschienen (8) zwei bewegbare Endanschlagknöpfe (11) umfasst, die dazu ausgebildet sind, den bewegbaren Vorhangschienenabschnitt (7) in der gewünschten Position entlang der Führungsschiene (8) zu halten.

8. Fahrzeugkabinenvorhangschienenanbringung (1) nach einem der Ansprüche 1 bis 7, wobei der bewegbare Vorhangschienenabschnitt (7) mindestens ein Endstück (21) umfasst, wobei jedes Endstück (21) des bewegbaren Vorhangschienenabschnitts (7) durch ein Führung-Schiene-Kopplungsmittel (12), das zum Führen des bewegbaren Vorhangschienenabschnitts (7) entlang der Führungsschiene (8) ausgebildet ist, an einer Führungsschiene (8) angebracht ist.

9. Fahrzeugkabinenvorhangschienenanbringung (1) nach einem der Ansprüche 1 bis 8, wobei Mittel zum Längenausgleich (22) an mindestens einer Endregion von mindestens einer Führungsschiene (8) bereitgestellt sind, um während der Bewegung auftretende Verformungen des Fahrzeugs auszugleichen, wobei das Mittel zum Längenausgleich (22) ein Langloch (24) umfasst.

10. Fahrzeugkabinenvorhangschienenanbringung (1) nach einem der Ansprüche 1 bis 9, wobei Mittel zum Winkelausgleich (23) an mindestens einer Seitenregion der Führungsschiene (8) bereitgestellt sind, um während der Bewegung auftretende Verformungen des Fahrzeugs auszugleichen, wobei die Mittel zum Winkelausgleich (23) eine Stiftbefestigung (26) umfassen, die dazu ausgebildet ist, einen Winkel zwischen der Führungsschiene (8) und dem bewegbaren Vorhangschienenabschnitt (7) einzustellen, vorzugsweise, um einen von einem 90°-Winkel abweichenden Winkel zwischen einer Achse der Führungsschiene (8) und einer Achse des bewegbaren Vorhangschienenabschnitts (7) einzustellen, die im Wesentlichen senkrecht zueinander sind, wenn sie nicht verformt sind.

11. Fahrzeugkabinenvorhangschienenanbringung (1) nach einem der Ansprüche 1 bis 10, wobei ein L-förmiger oder ein U-förmiger bewegbarer Vorhangschienenabschnitt (7) bereitgestellt ist, um mit der mindestens einen Führungsschiene (8) verbunden zu werden, vorzugsweise, um mit einem Paar Führungsschienen (8) verbunden zu werden.

12. Fahrzeugkabinenvorhangschienenanbringung (1) nach Anspruch 11, wobei der L-förmige oder U-förmige bewegbare Vorhangschienenabschnitt (7) mindestens zwei vorzugsweise lineare, bewegbare Vorhangschienenabschnitte umfasst, die durch Vorhang-Schiene-Abschnitt-Kopplungsmittel (17) gekoppelt sind, die dazu ausgebildet sind, das Verschieben des Vorhangs (2) von einem vorzugsweise linearen bewegbaren Vorhangschienenabschnitt (7) zu dem angrenzenden bewegbaren Vorhangschienenabschnitt (7) zu unterstützen.

13. Fahrzeugkabinenvorhangschienenanbringung (1) nach Anspruch 12, wobei die Vorhang-Schiene-Abschnitt-Kopplungsmittel in einen verriegelten Status einstellbar sind, in dem die bewegbaren Vorhangschienenabschnitte (7) in Bezug zueinander abnehmbar befestigt sind, und in einen entriegelten Status, in dem die bewegbaren Vorhangschienenabschnitte (7) in Bezug zueinander frei bewegbar sind.

14. Fahrzeugkabinenvorhangschienenanbringung (1) nach Anspruch 12 oder 13, wobei das Vorhang-Schiene-Abschnitt-Kopplungsmittel einen Knopf (19) umfasst, um den entriegelten Status zu erreichen, und eine Feder, um die verriegelte Position automatisch durch Federlast zu erreichen.

## Revendications

1. Fixation (1) de rail de rideau de cabine de véhicule comprenant :
un rail de guidage (8) conçu pour être monté de manière fixe dans une cabine du véhicule et une section mobile (7) de rail de rideau pour recevoir et/ou guider un rideau (2),
la section mobile (7) de rail de rideau étant conçue pour coulisser le long du rail de guidage (8) jusqu'à une position souhaitée,
la section mobile (7) de rail de rideau étant conçue pour être retenue dans la position souhaitée le long du rail de guidage (8) par au moins un bouton mobile (11) de butée d'extrémité conçu pour coulisser le long du rail de guidage (8) et conçu pour venir en prise avec le rail de guidage (8) afin de fixer l'au moins un bouton mobile (11) de butée d'extrémité au rail de guidage (8) dans une position de verrouillage, et
l'au moins un bouton mobile (11) de butée d'extrémité comprenant une broche (18) conçue pour atteindre un état verrouillé et un état déverrouillé.

2. Fixation (1) de rail de rideau de cabine de véhicule selon la revendication 1, la section mobile (7) de rail de rideau étant mobile le long d'au moins un rail de guidage (8) entre deux boutons fixes (9) de butée d'extrémité qui sont montés au niveau de pièces d'extrémité (10) du rail de guidage (8) et conçus pour empêcher la section mobile (7) de rail de rideau d'être détachée du rail de guidage (8).

3. Fixation (1) de rail de rideau de cabine de véhicule selon la revendication 1 ou 2, l'au moins un bouton mobile (11) de butée d'extrémité étant commutable entre un état déverrouillé dans lequel il est mobile le long de la section de guidage (8) jusqu'à la position de verrouillage et un état verrouillé dans lequel il est fixé de manière amovible dans la position de verrouillage pour maintenir la section mobile (7) de rail de rideau dans la position souhaitée.

4. Fixation (1) de rail de rideau de cabine de véhicule selon la revendication 2, les boutons fixes (9) de butée d'extrémité comprenant une broche (18), en particulier une broche d'indexage (18), conçue pour atteindre un état verrouillé et un état déverrouillé.

5. Fixation (1) de rail de rideau de cabine de véhicule selon la revendication 4, la broche (18) comprenant un bouton (19) pour atteindre l'état déverrouillé en utilisant, de préférence en poussant ou en tirant, le bouton (19) et un ressort pour atteindre automatiquement l'état verrouillé par la charge de ressort.

6. Fixation (1) de rail de rideau de cabine de véhicule selon l'une des revendications 1 à 5, une paire de rails de guidage (8) étant conçue pour être montée de manière fixe dans la cabine, la section mobile (7) de rail de rideau étant fixée entre les deux rails de guidage (8) de ladite paire.

7. Fixation (1) de rail de rideau de cabine de véhicule selon l'une des revendications 1 à 6, une pluralité de rails de guidage (8) étant munis chacun de deux boutons fixes (9) de butée d'extrémité pour empêcher la section mobile (7) de rail de rideau d'être détachée du rail de guidage (8), les boutons fixes (9) de butée d'extrémité étant positionnés de manière fixe au niveau de chaque pièce d'extrémité (10) du rail de guidage (8), et au moins un des rails de guidage (8) comprenant deux boutons mobiles (11) de butée d'extrémité conçus pour retenir la section mobile (7) de rail de rideau à la position souhaitée le long du rail de guidage (8).

8. Fixation (1) de rail de rideau de cabine de véhicule selon l'une des revendications 1 à 7, la section mobile (7) de rail de rideau comprenant au moins une pièce d'extrémité (21), chaque pièce d'extrémité (21) de la section mobile (7) de rail de rideau étant fixée à un rail de guidage (8) par un moyen d'accouplement de rail de guidage (12) conçu pour guider la section mobile (7) de rail de rideau le long du rail de guidage (8).

9. Fixation (1) de rail de rideau de cabine de véhicule selon l'une des revendications 1 à 8, un moyen de compensation de longueur (22) étant fourni sur au moins une zone d'extrémité d'au moins un rail de guidage (8) afin de compenser les déformations en mouvement du véhicule, le moyen de compensation de longueur (22) comprenant un trou oblong (24).

10. Fixation (1) de rail de rideau de cabine de véhicule selon l'une des revendications 1 à 9, un moyen de compensation d'angle (23) étant fourni sur au moins une zone latérale du rail de guidage (8) afin de compenser les déformations en mouvement du véhicule, le moyen de compensation d'angle (23) comprenant une fixation à broche (26) conçue pour régler un angle entre le rail de guidage (8) et la section mobile (7) de rail de rideau, de préférence pour régler un angle s'écartant d'un angle à 90° degrés entre un axe du rail de guidage (8) et un axe de la section mobile (7) de rail de rideau qui sont essentiellement perpendiculaires l'un à l'autre lorsqu'ils ne sont pas déformés.

11. Fixation (1) de rail de rideau de cabine de véhicule selon l'une des revendications 1 à 10, une section mobile (7) de rail de rideau en forme de L ou de U étant fournie pour être reliée à au moins un rail de guidage (8), de préférence pour être reliée à une paire de rails de guidage (8).

12. Fixation (1) de rail de rideau de cabine de véhicule selon la revendication 11, la section mobile (7) de rail de rideau en forme de L ou de U comprenant au moins deux parties mobiles, de préférence linéaires, de rail de rideau qui sont accouplées par un moyen d'accouplement (17) de section de rail de rideau conçu pour supporter le déplacement du rideau (2) d'une section mobile (7), de préférence linéaire, de rail de rideau à la section mobile (7) de rail de rideau adjacente.

13. Fixation (1) de rail de rideau de cabine de véhicule selon la revendication 12, le moyen d'accouplement de section de rail de rideau étant réglable dans un état verrouillé dans lequel les sections mobiles (7) de rail de rideau sont fixées de manière amovible les unes par rapport aux autres et dans un état déverrouillé dans lequel les sections mobiles (7) de rail de rideau sont librement mobiles les unes par rapport aux autres.

14. Fixation (1) de rail de rideau de cabine de véhicule selon la revendication 12 ou 13, le moyen d'accouplement de rail de rideau comprenant un bouton (19) pour atteindre l'état déverrouillé et un ressort pour atteindre la position verrouillée automatiquement par la charge de ressort.
